# EUROPEAN PATENT SPECIFICATION

(11) **EP 1 917 112 B1**
(45) Date of publication and mention of the grant of the patent: **06.10.2010**
(21) Application number: 06769584.1
(22) Date of filing: 25.07.2006
(51) Int. Cl.: B08B 15/04, F16D 71/00

(54) **LOCKABLE FRICTION JOINT**
VERRIEGELBARE REIBVERBINDUNG
JOINT DE FRICTION VERROUILLABLE

(30) Priority: 04.08.2005 SE 0501781
(43) Date of publication of application: 07.05.2008
(73) Proprietor: FUMEX AB, 931 61 Skelleftea (SE)
(72) Inventor: HEDLUND, Lars, S-931 52 Skelleftea (SE)
(74) Representative: Körber, Martin Hans
(86) International application number: PCT/SE2006/000912
(87) International publication number: WO 2007/015663

(56) References cited:
- EP-A1- 0 516 213
- EP-A1- 0 750 950
- WO-A1-96/27452
- DE-A1- 2 629 689
- DE-C1- 4 016 436
- GB-A- 1 511 408
- GB-A- 2 046 858
- GB-A- 2 267 324
- SE-B- 358 753
- SE-C2- 519 926
- US-A- 4 158 462
- US-A- 4 860 644
- US-A- 5 211 602
- US-A- 5 536 206

## Description

The present invention relates to a lockable friction joint, in particular one intended to be set to a desired relative swing position between two sections of tube, as specified in the introduction in claim 1.

A prior art lockable friction joint for tubes is disclosed in US-A-4860644.

When setting a desired relative swing position between two sections of tube in, for example, a gas extraction arrangement, a point suction arrangement, or similar, a simple and reliable arrangement for setting position in the form of a friction joint is required.

This is the case, for example, for a friction-jointed point suction device developed to be used at workplaces where high mobility is required, such as, for example, laboratories and in electronics industries, whereby positioning should take place in an easy and simple manner with a minimum of time required.

One object of the present invention is to provide a lockable friction joint that in a simple and extremely reliable manner satisfies the requirements described above. This object is achieved through the arrangement demonstrating the characteristics specified in the attached patent claims.

The many advantages of the invention include the following. The friction joint according to the invention comprises what is known as the triple-friction concept, i.e. one that comprises a total of three active friction surfaces, and this makes it possible to construct a joint with small dimensions. This ensures that a low consumption of tightening force is required when locking the joint, and this makes it possible to set the position simply, without requiring auxiliary tools, since manual tightening by means of manual power is sufficient, while at the same time a greater weight can be supported by the joint. The joint is easy to clean, and there is no risk of crushing injury. Furthermore, the joint is simple in design and demonstrates only a few component parts. An adjustment knob that can be operated by one hand is sufficient to operate the friction joint according to the invention, which is a position-stable joint that has a very smooth and easy function. The lockable friction joint according to the invention thus demonstrates both technical and economic advantages.

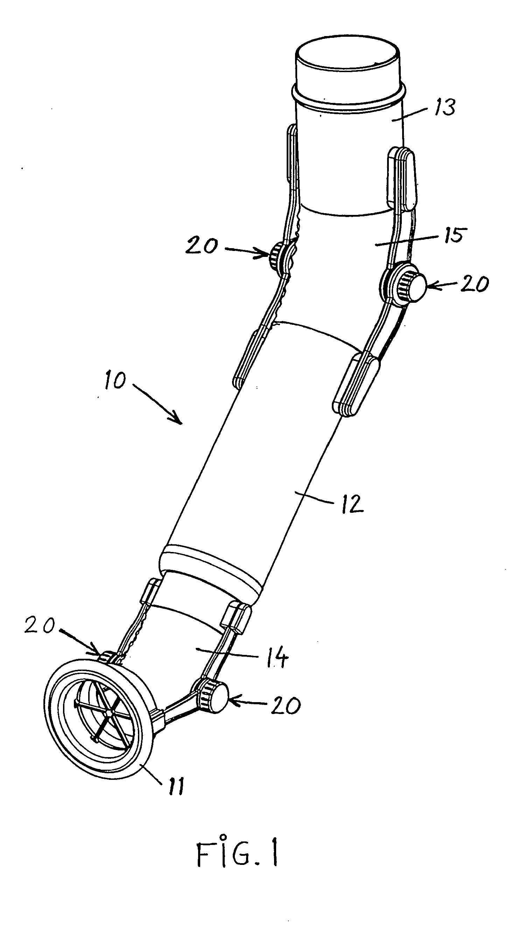

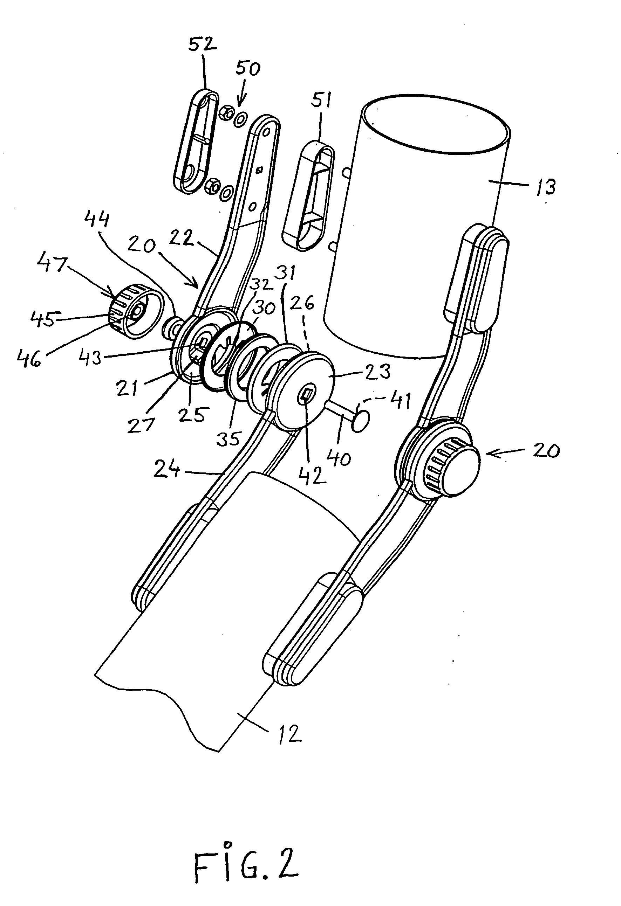

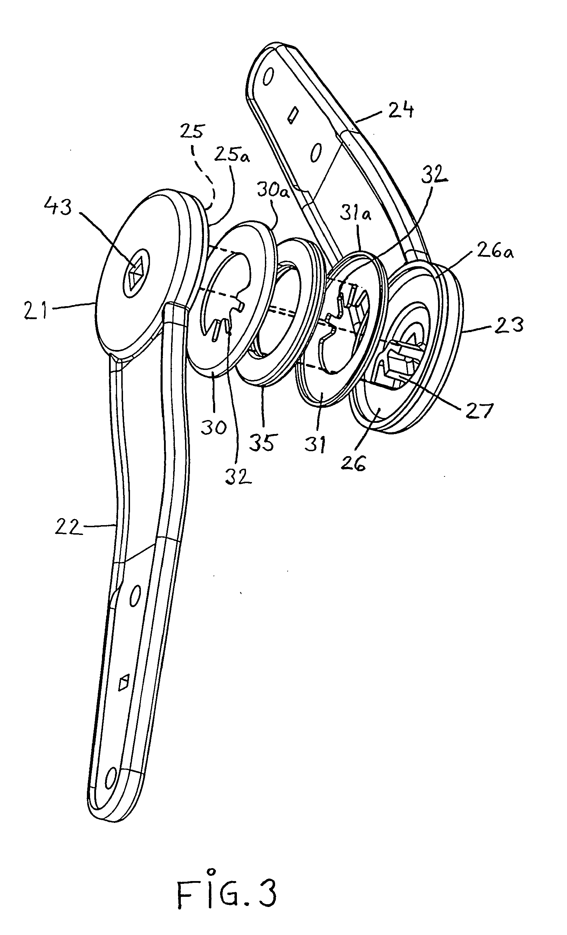

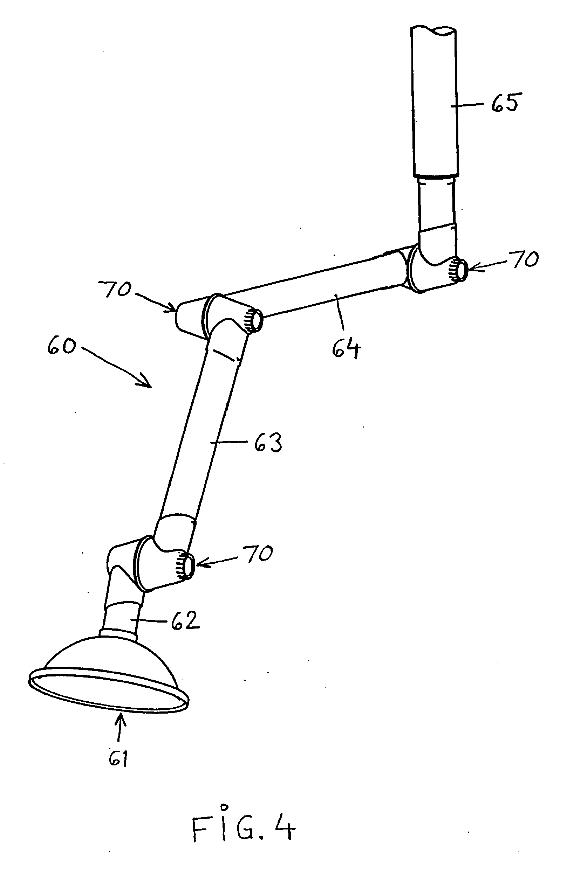

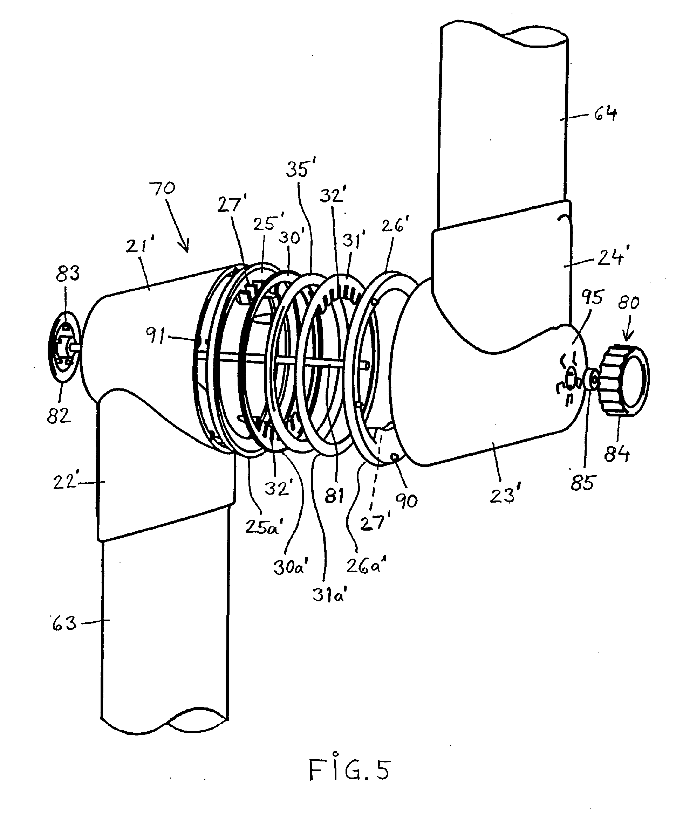

Embodiments of the invention will be described in more detail below with reference to the attached drawings in which Figure 1 shows a view in perspective of a section of a gas extraction arrangement or a point suction arrangement that is provided with friction joints according to the invention in a first embodiment; Figure 2 shows a section of Figure 1 that supports the said joints whereby one joint is shown in an exploded view; Figure 3 shows a joint arrangement according to Figure 1 and Figure 2 in a further exploded view; Figure 4 shows a view in perspective of a second embodiment of a friction joint according to the invention mounted on a gas extraction arrangement or a point suction arrangement; and Figure 5 shows an exploded view in perspective of the second embodiment of the friction joint shown in Figure 4.

Figure 1 shows a part of a gas extraction arrangement 10 that comprises, among other components, a suction unit 11, two sections of tube 12, 13 and flexible sections of tube 14, 15. In the example shown, the lockable friction joint 20 according to the invention is present at four different locations whereby the joining arrangements are arranged in pairs. Alternatively, the friction joint 20 may be arranged on only one side of the relevant section of tube.

The detailed design of the lockable friction joint is shown in Figures 2 and 3. The friction joint 20 comprises a first joint part 21 with a first arm part 22 and a second joint part 23 with a second arm part 24. The first joint part 21 and the second joint part 23 each support a ring 25 and 26 respectively, which rings are provided with pusher dogs, where the pusher dogs are constituted by bosses 27. Furthermore, the friction joint 20 comprises two friction disks 30, 31 provided with holes, each disk demonstrating means 32 to interact in a manner that transfers motion to the rings 25, 26 that are provided with pusher dogs. The motion transfer means is constituted by depressions/grooves 32 that interact with the previously described bosses 27. A circular friction plate 35, provided with a hole, is arranged between the friction disks 30 and 31, whereby the relevant friction disk 30, 31 is coupled in a manner that transfers motion with the ring that is provided with pusher dogs that is located on the opposite side of the friction plate 35. In other words, the bosses 27 of the ring 25 engage with the depressions/grooves 32 of the friction disc 31 and the bosses 27 of the ring 26 engage with the depressions/grooves 32 of the friction disc 30, whereby the friction plate 35 is compressed between the friction disks 30 and 31 in a mounted and tightened friction joint 20. The friction joint 20 is compressed and tightened with the aid of a tightening screw 40, the rotation of which is prevented in that the lower surface of the screw head demonstrates, for example, a square part 41 that fits into a square hole 42 in the second joint part 23. The screw 40 passes through the friction unit comprising the elements 21, 23, 25, 26, 30, 31, 35; extends out through the hole 43 in the first joint part 21, and passes onwards through a roller bearing in the form of an axial ball bearing 44 to an adjustment knob 45 that demonstrates a nut thread 46 for threaded interaction with the free end of the screw 40. Thus the friction joint 20 is compressed by an adjustable compression means 47 that comprises the previously described screw 40, ball bearing 44, and adjustment knob 45.

It should be mentioned that the rings 25, 26, 30, 31 each demonstrate a guiding edge or guiding collar in order to guide the components that lie next to them. These guiding edges have here been given the reference numbers 25a, 26a, 30a, 31a.

The friction joint 20 described above is mounted onto the relevant section of tube, for example 12, 13, through the arm parts 22 and 24 being screwed attached to the said sections of tube, and one method of attachment is shown as an example in Figure 2, where the free ends of the arm parts 22, 24 are arranged at the sections of tube 12, 13 through a screw arrangement 50. A spacer element 51 is employed, together with a cover 52, in addition to the required screw components.

The friction joint 20 has a limited range of action (for example, approximately 110°) due to the presence of the bosses 27, which at the same time makes it impossible to mount the friction joint erroneously. The friction joint 20 according to the invention is constructed in such a manner that a requirement for left and right versions has been eliminated, and this is advantageous from the point of view of tools.

When the friction joint 20, one or several, is mounted at the intended location the desired degree of friction is produced by means of the compression means 47, i.e. with the aid of the adjuster nut 45, whereby the ball bearing 44 insulate the friction that has been set, and ensures that the arrangement 10 can be set to a position without the joint 20 becoming stuck or losing stability and function. Setting to new desired positions, i.e. changes in position, are very simple and rapid to carry out by means of the friction joint according to the invention.

The second embodiment of the invention shown in Figures 4 and 5 will now be described in more detail. Figure 4 shows a section of a point suction arrangement 60 with friction joints. This arrangement comprises a suction hood 61 and a number of sections of tube 62-65. Lockable friction joints 70 according to the invention are arranged between the said sections of tube 62-65. Figure 5 shows an exploded view of such a friction joint 70, and it should be noted that the fundamental design of this friction joint 70 is, in principle, the same as that of the previously described friction joint 20. Components that are equivalent to those of the first embodiment described above have for this reason been given the same reference numbers, with the addition of a prime mark.

One difference between this embodiment and the first embodiment is that the first joint part is here constituted by a tube-shaped element 21', which communicates with a first arm part 22' in the form of a section of a tube. The first arm part 21' can in this way be considered to constitute an angled section of a tube whereby the section of tube 22' can be connected to, for example, a section of tube 63. The second joint part in an equivalent manner comprises a tube-shaped element 23' with a second section of tube (second arm part) 24' such that it is possible to connect it to, for example, a section of tube 64. Uninterrupted gas communication or flow communication is in this way obtained through the lockable friction joint 70 according to the invention. The tightening means 80 is constructed in principle in the same manner as the previously described tightening means 47. The tightening means 80 comprises a screw 81 whose head 82 demonstrates lugs 83 that prevent rotation of the screw head 82 and the screw 81. An adjustment knob 84 is screwed onto the free end of the screw 81 while at the same time a roller bearing 85, preferably an axial ball bearing, is arranged between the adjustment knob 84 and one end plane 95 of the joint part 23', as is shown in Figure 5.

The rings 25'. 26', 30', 31' are provided, in a manner equivalent to that described above, with guide edges or guide collars 25a', 26a', 30a', 31a' in order to control guiding interactions with neighbouring components. It should also be mentioned that the rings 25' and 26', which are provided with pusher dogs, demonstrate guiding lugs 90 that make it possible to fix the ring relative to its neighbouring joint parts 21' and 23' at different rotational positions, whereby the degree of rotation of the friction joint and the limitations on its position can be varied and controlled as the situation requires. The receiving holes 91 of the lugs 90 are shown in Figure 5.

One advantage of the second embodiment described is that the friction joint is incorporated into the tube line itself, and thus does not significantly affect the external geometry, while it does not either significantly interfere with the flow of medium in the line.

The component parts of the second embodiment are, as is the case for the first embodiment, preferably designed such that the need for left and right variants is avoided.

As has been described previously, the friction joint 20/70 according to the invention offers very good technical properties due to the number of friction surfaces that are present. Thus, three active friction surfaces are present, one of which is between the rings 25/25' and 30/30', one between the rings 26/26' and 31/31', and a further collective friction surface between the rings 30/30', 35/35' and 31/31'.

One common property of both embodiments is that the friction disk 31/31' accompanies the turning motion of the first joint part 21/21' and that the friction disk 30/30' accompanies the turning motion of the second joint part 23/23'.

With respect to the friction joint 20, this can be applied according to requirements and as desired not only as a double-sided unit (in pairs), but also as a single-sided unit on the relevant object.

It should be realised that the detailed design of the arrangement according to the invention can be varied extensively within the framework of the innovative concept. There are, of course, major opportunities for variation with respect to the choice of material for the various components, whereby it is appropriate that the choice of material is adapted to the frictional properties that are desired in the particular application.

It can be mentioned as a non-limiting example that the roller bearings 44, 85 can be exchanged for, for example, glide bearings. The rotational/turning locking of the screws 40, 81 can also, naturally, be varied.

It should, furthermore, be realised that the arrangement according to the invention can be used in many different contexts in addition to those which have been given as examples above.

Thus the invention is not limited to what has been shown and described, changes and modifications can be made within the scope of the accompaning claims.

## Claims

1. A lockable friction joint, in particular one intended to be set to a desired relative swing position between two sections of tube, in, for example, a gas extraction arrangement, a point suction arrangement, or similar, whereby the lockable friction joint (20;70) comprises a first joint part (21;21') with a first arm part (22) or section of tube (22') and a second joint part (23;23') with a second arm part (24) or section of tube (24'), **characterised in that** the first joint part (21;21') and the second joint part (23;23') each support a ring (25;25' and 26;26', respectively), which rings are provided with pusher dogs (27;27'), that the friction joint (20;70) comprises two friction disks (30,31;30',31') provided with holes, each disk demonstrating means (32;32') to interact in a manner that transfers motion to the rings (25,26;25',26') that are provided with pusher dogs, that a friction plate (35;35'), provided with a hole, is arranged between the said friction disks (30,31 ;30',31'), that the friction disks are coupled in a manner that transfers motion to the ring (25,26 and 25',26'), that is provided with pusher dogs, that is located on the opposite side of the friction plate (35;35'), and **in that** the friction joint (20,70) is compressed with the aid of an adjustable tightening means (47;80).

2. A lockable friction joint according to claim 1, **characterised in that** the rings (25,26;25',26') that are provided with pusher dogs and the friction disks (30,31;30',31') has a guiding edge or guiding collar (25a,26a,30a,31 a;25a',26a',30a',31a').

3. A lockable friction joint according to claim 1 or 2, **characterised in that** the tightening means (47;80) comprises a screw (40;81) that is locked against rotation at its first end and that supports an adjustment means (45;84) at its second end.

4. A lockable friction joint according to any one of claims 1-3, **characterised in that** the tightening means (47:80) comprises a roller bearing (44;85) or a glide bearing.

5. A lockable friction joint according to any one of claims 1-4, **characterised in that** the friction joint (20) is externally mounted onto connected objects (11-15).

6. A lockable friction joint according to any one of claims 1-4, **characterised in that** the friction joint (70) is integrated into a tube system (63,64).

7. A lockable friction joint according to any one of claims 1-4, **characterised in that** the screw (81) of the tightening means (80) passes through a channel through which medium flows.

8. A use of an arrangement according to any one of claims 1-7, **characterised in that** the arrangement is used in a gas extraction arrangement.

9. A use of an arrangement according to any one of claims 1-7, **characterised in that** the arrangement is used in a point suction arrangement.

## Patentansprüche

1. Verriegelbare Reibverbindung, insbesondere eine, die dazu gedacht ist an eine gewünschte relative Schwenkposition zwischen zwei Röhrenabschnitten in zum Beispiel einer Gasförderanlage, einer Punktsauganlage oder Ähnlichem gesetzt zu werden, wobei die verriegelbare Reibverbindung (20; 70) einen ersten Verbindungsteil (21; 21') mit einem ersten Armteil (22) oder Röhrenabschnitt (22') und einen zweiten Verbindungteil (23, 23') mit einem zweiten Armteil (24) oder Röhrenabschnitt (24`) aufweist,
**dadurch gekennzeichnet, dass** der erste Verbindungsteil (21; 21') und der zweite Verbindungteil (23; 23') beide einen Ring stützen (25; 25' beziehungsweise 26; 26'), wobei die Ringe mit Mitnehmern (27; 27') versehen sind, dass die Reibverbindung (20;70) zwei mit Löchern versehene Reibscheiben (30,31; 30',31') aufweist, wobei jede Scheibe Mittel (32; 32') aufweist, um auf eine Weise zusammenzuwirken, die Bewegung auf die mit den Mitnehmern versehenen Ringe (25, 26; 25', 26') überträgt, dass eine mit einem Loch versehene Reibplatte (35; 35') zwischen den Reibscheiben (30, 31; 30', 31') angeordnet ist, dass die Reibscheiben auf eine Weise gekoppelt sind, die Bewegung auf den mit Mitnehmern versehenen Ring (25, 26 und 25', 26') überträgt, der auf der gegenüberliegenden Seite der Reibplatte (35; 35') angeordnet ist, und dass die Reibverbindung (20; 70) mit Hilfe eines einstellbaren Festigungsmittels (47; 80) zusammengedrückt wird.

2. Verriegelbare Reibverbindung gemäß Anspruch 1, **dadurch gekennzeichnet, dass** die mit Mitnehmern versehenen Ringe (25, 26; 25',26') und die Reibplatten (30, 31; 30',31') eine Führungskante oder einen Führungskragen (25a, 26a, 30a, 31a; 25a', 26a', 30a', 31a') aufweisen.

3. Verriegelbare Reibverbindung gemäß Anspruch 1 oder 2, **dadurch gekennzeichnet, dass** das Festigungsmittel (47; 80) eine Schraube (40; 81) aufweist, die gegen Drehung an ihrem ersten Ende verriegelt ist, und die an ihrem zweiten Ende ein Einstellmittel (45; 84) stützt.

4. Verriegelbare Reibverbindung gemäß einem der Ansprüche 1 bis 3, **dadurch gekennzeichnet, dass** das Feststellmittel (47; 80) ein Rollenlager (44; 85) oder ein Gleitlager aufweist.

5. Verriegelbare Reibverbindung gemäß einem der Ansprüche 1 bis 4, **dadurch gekennzeichnet, dass** die Reibverbindung (20) äußerlich auf verbundene Objekte (11-15) montiert ist.

6. Verriegelbare Reibverbindung gemäß einem der Ansprüche 1 bis 4, **dadurch gekennzeichnet, dass** die Reibverbindung (70) in ein Röhrensystem (63, 64) integriert ist.

7. Verriegelbare Reibverbindung gemäß einem der Ansprüche 1 bis 4, **dadurch gekennzeichnet, dass** die Schraube (81) des Feststellmittels (80) einen Kanal durchläuft, durch den ein Medium fließt.

8. Verwendung einer Anordnung gemäß einem der Ansprüche 1 bis 7, **dadurch gekennzeichnet, dass** die Anordnung in einer Gasförderanlage verwendet wird.

9. Verwendung einer Anordnung gemäß einem der Ansprüche 1 bis 7, **dadurch gekennzeichnet, dass** die Anordnung in einer Punktsauganlage verwendet wird.

## Revendications

1. Joint de friction verrouillable, destiné notamment à être placé à une position de pivotement relative entre deux sections de tube, par exemple dans un système d'extraction de gaz, un système d'aspiration ponctuelle ou analogue, le joint de friction verrouillable (20 ; 70) comprenant une première partie de joint (21 ; 21') dotée d'une première partie formant bras (22) ou section de tube (22') et une seconde partie de joint (23 ; 23') dotée d'une seconde partie formant bras (24) ou section de tube (22'), **caractérisé en que** la première partie de joint (21 ; 21') et la seconde partie de joint (23 ; 23') supportent chacune une bague (25 ; 25' et 26 ; 26', respectivement), lesquelles bagues sont dotées de taquets poussoirs (27 ; 27'), en ce que le joint de friction (20 ; 70) comprend deux disques de friction (30, 31 ; 30', 31') dotés de trous, chaque disque présentant des moyens (32 ; 32') pour interagir de manière à transférer le mouvement aux bagues (25, 26 ; 25', 26') qui sont dotées de taquets poussoirs, en ce qu'une plaque de friction, dotée d'un trou, est disposée entre lesdits disques de friction (30, 31 ; 30', 31'), en ce que les disques de friction sont couplés de manière à transférer le mouvement à la bague (25, 26 et 25', 26') qui est dotée de taquets poussoirs et qui est placée du côté opposé de la plaque de friction (35 ; 35'), et en ce que le joint de friction (20 ; 70) est comprimé à l'aide d'un moyen de serrage réglable (47, 80).

2. Joint de friction verrouillable selon la revendication 1, **caractérisé en ce que** les bagues (25, 26 ; 25', 26') qui sont dotées de taquets poussoirs et les disques de friction (30, 31 ; 30', 31') possèdent un bord de guidage ou un collier de guidage (25a, 26a, 30a, 31a ; 25a', 26a', 30a', 31a').

3. Joint de friction verrouillable selon la revendication 1 ou 2, **caractérisé en ce que** le moyen de serrage (47 ; 80) comprend une vis (40 ; 81) qui est bloquée en rotation à sa première extrémité et qui supporte à sa seconde extrémité un moyen de réglage (45 ; 84).

4. Joint de friction verrouillable selon l'une quelconque des revendications 1 à 3, **caractérisé en ce que** le moyen de serrage (47 ; 80) comprend un palier à rouleaux (44 ; 85) ou un palier glissant.

5. Joint de friction verrouillable selon l'une quelconque des revendications 1 à 4, **caractérisé en ce que** le joint de friction (20) est monté à l'extérieur sur des objets raccordés (11 à 15).

6. Joint de friction verrouillable selon l'une quelconque des revendications 1 à 4, **caractérisé en ce que** le joint de friction (70) est intégré dans un système de tubes (63, 64).

7. Joint de friction verrouillable selon l'une quelconque des revendications 1 à 4, **caractérisé en ce que** la vis (81) du moyen de serrage (80) passe à travers un canal dans lequel s'écoule un fluide.

8. Utilisation d'un système selon l'une quelconque des revendications 1 à 7, **caractérisée en ce que** le système est utilisé dans un système d'extraction de gaz.

9. Utilisation d'un système selon l'une quelconque des revendications 1 à 7, **caractérisée en ce que** le système est utilisé dans un système d'aspiration ponctuelle.
